# EUROPEAN PATENT SPECIFICATION

(11) **EP 2 029 254 B1**
(45) Date of publication and mention of the grant of the patent: **16.07.2014**
(21) Application number: 06752107.0
(22) Date of filing: 02.05.2006
(51) Int. Cl.: B01D 29/62, B01D 33/44, B01D 35/12, B01D 35/22, C02F 1/32, B01D 29/00, B01D 29/11, C02F 1/00, C02F 103/00

(54) **APPARATUS AND METHOD FOR SEPARATING AND FILTERING PARTICLES AND ORGANISMS FROM A HIGH VOLUME FLOWING LIQUID**
VORRICHTUNG UND VERFAHREN ZUR ABTRENNUNG UND ABFILTRATION VON PARTIKELN UND ORGANISMEN AUS EINER HOCHVOLUMIGEN STRÖMENDEN FLÜSSIGKEIT
APPAREIL ET PROCEDE PERMETTANT DE SEPARER ET DE FILTRER DES PARTICULES ET DES ORGANISMES A PARTIR DE L'ECOULEMENT D'UN GRAND VOLUME DE LIQUIDE

(43) Date of publication of application: 04.03.2009
(73) Proprietor: Nilsen, Birgir, Stamford, CT 06906 (US)
(72) Inventor: NILSEN, Halvor, N-4027 Stavanger (NO)
(74) Representative: Santi, Filippo
(86) International application number: PCT/US2006/016859
(87) International publication number: WO 2007/130029

(56) References cited:
- BE-A2- 878 732
- CH-A- 516 331
- DE-A1- 2 816 925
- DE-A1- 3 239 433
- DE-A1- 19 748 233
- GB-A- 1 351 955
- US-A- 3 353 678
- US-A- 3 700 110
- US-A- 3 896 005
- US-A- 4 642 188
- US-A1- 2005 040 091
- US-B2- 6 821 420
- US-E- R E27 163

## Description

### FIELD OF THE INVENTION

The invention relates to an apparatus and method for filtration of solid particles and organisms from a flowing liquid.

### BACKGROUND OF THE INVENTION

Water filtration systems employ strainers or filter elements that eventually become clogged with solid particles and organisms such that it is necessary to clean the filter elements in order to maintain operating efficiency of the filtration system.

DE3239433 discloses a liquid filter, in particular for purifying sea water or river water, with one or more screen tubes, into which the liquid to be filtered is introduced at one end and which retain impurities, but which allow the purified liquid to pass through the perforations. For cleaning the screen tubes, in whose perforations thread-like foreign bodies can be attached, a reduced pressure, distributed over the active surface of the screen tubes is produced with the aid of a cleaning valve of a suitable shape and size at the other end of each screen tube. The valve has a passage cross-section which permits the screen tube to empty in a short time and without the occurrence of blockages.

CH516331 discloses a method of filtering a fluid, making use of a filter element which is cleaned by scanning the filter surface by inducing upstream of the filtering surface of air, a gas or a liquid according to the fluid to be filtered so as to obtain an emulsion of scanning.

US 4642188, DE19748233 and BE878732 all disclose solutions according to which a spiral flow is induced for cleaning of the filter surface and retarding the deposition of filter cake during filtration. According to DE19748233 such a spiral flow is established through a tangential inlet of the fluid, while according to BE878732 it is caused by fins at the entrance and according to DE2816925 by a spiral blade along the filtering surface.

Finally, GB 1351955 discloses an emulsion of air and water for obtaining a cleaning effect on filtering surface. The cleaning emulsion or air-water foam takes effect at the periphery of filtering tube. Air is supplied for such emulsion by compressed air, pulsed air, or air sucked in by Giffard effect or venture tube.

### SUMMARY OF THE INVENTION

This application is directed to an apparatus and method for separating and filtering particles and organisms from a high volume flowing liquid delivered at pump outlet pressure to a filter chamber having plural filter elements, with filter element back-flushing self-cleaning system, with gas-assisted filtration and treatment of water, and with use of the apparatus and method in high flow water treating applications including ballast water treatment, cooling water, fish farming, potable water and industrial water. It is an objective of the invention to provide a device that can separate and filter particles and organisms from a high volume flow of liquid under pump inlet pressure through multiple parallel filtering elements situated in a filter housing whereby individual filter elements can be cleaned while maintaining a substantial liquid flow through the filtering apparatus. To this end the invention provides an apparatus according to claim 1 and a method according to claim 9.
Preferred embodiments of the apparatus and method of the present invention are defined in the corresponding dependent claims.

Other objectives, advantages and preferred features of the invention will become apparent with an understanding of the following detailed description of preferred embodiments the invention or upon employment of the invention in practice.

### BRIEF DESCRIPTION OF THE DRAWING

A preferred embodiment of the invention has been chosen for detailed description to enable those having ordinary skill in the art to which the invention appertains to readily understand how to practice the invention and is shown in the accompanying drawing in which:
Figure 1 is a side elevation section view of the apparatus of the invention.
Figure 2 is a top plan view of the top flange of the apparatus of Figure 1.
Figure 3 is a section view of the top flange of Figure 2.
Figure 4 is top plan view of the filter housing flange of the apparatus of Figure 1.
Figure 5 is a section view of the filter housing flange of Figure 4 showing position of filter elements. Figure 6 is a plan view of the filter housing bottom flange.
Figure 7 is a section view of the bottom flange of Figure 6 showing position of filter elements.
Figure 8 is a bottom plan view sludge discharge manifold of the filter housing apparatus of Figure 1. Figure 9 is a filter element forming part of the filter housing apparatus of Figure 1.
Figure 10 is a side elevation section view a modified embodiment of the apparatus of the invention.
Figure 11 is a bottom plan view sludge discharge manifold of the filter housing apparatus of Figure 10.
Figure 12 is a section view of manifold of Figure 11.
Figure 13 is a schematic view showing the apparatus of Figure 1 in use with ultraviolet treating chambers and other shipboard equipment for treating ballast.

### DETAILED DESCRIPTION OF THE PREFERRED EMBODIMENT

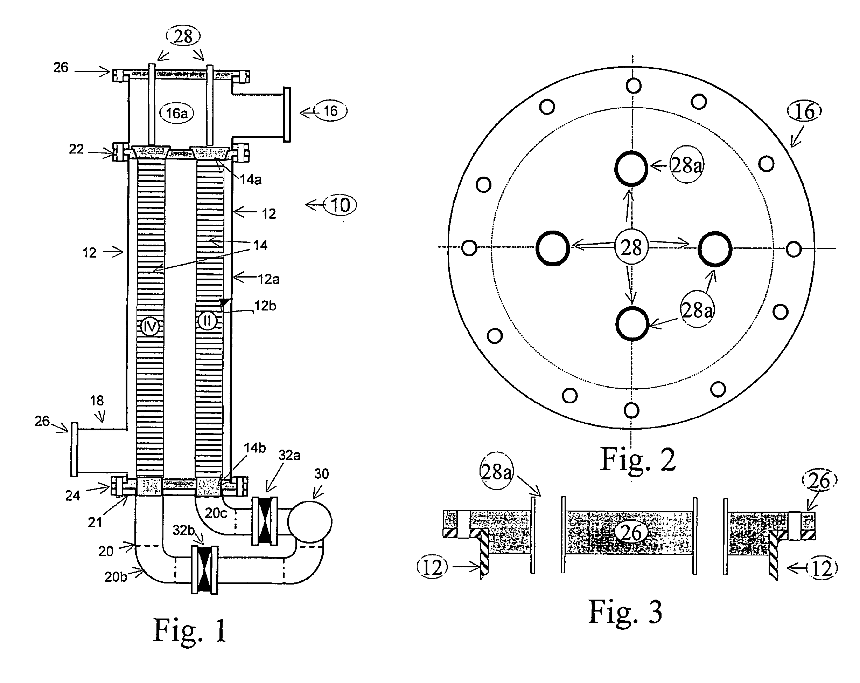

Referring to the drawing, the apparatus 10 according to the invention comprises a filter housing 12 for filtering a high volume flowing liquid, filter elements 14 (referred to individually by numerals I, II, III and IV) positioned within the housing, an inlet manifold 16 for receiving and directing liquid to the filter housing, an outlet 18 for delivering filtered liquid from the filter housing, and a sludge manifold 20 for receiving and discharging from the filter housing a sludge of particles and organisms filtered by the filter elements from liquid processed by the apparatus of the invention, The filter housing is an elongate shell 12a defining filter housing chamber 12b, is preferably cylindrical, and is fitted with filter housing flange 22 and bottom flange 24. An outlet nozzle 26 extends outward from the housing adjacent the bottom flange. A plurality of filter elements 14, preferably four in the embodiment of Figures 1-9, are secured within the housing with element ends 14a, 14b fitted into the filter housing flange and the bottom flange, respectively. The filter housing is surmounted by an inlet manifold 16 defining an inlet chamber 16a secured to the filter housing flange 22. The inlet manifold includes inlet pipe 16b and an injection top flange 26 through which injection pipes 28 pass for the purpose of injecting chemicals into the liquid being processed. The top flange 26 (Figs 2 and 3) is a round plate with injection pipe openings 28a there-through.

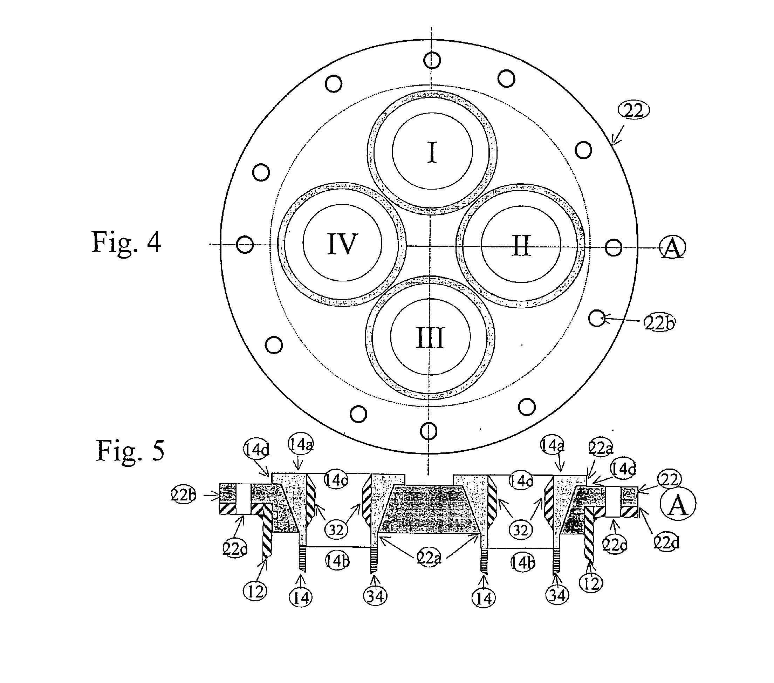

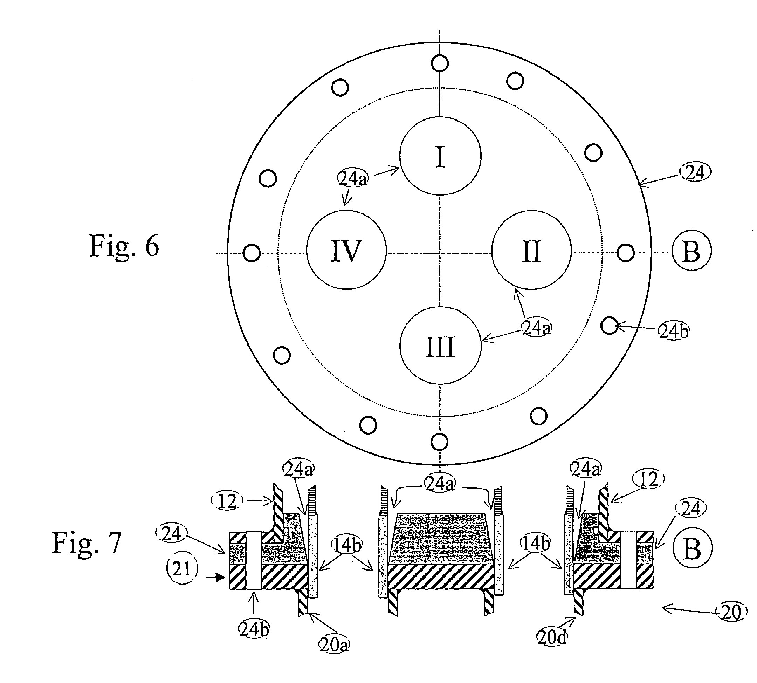

The filter housing flange 22 is shown in Figures 4 and 5 and comprises a round plate having four beveled openings 22a for receiving and supporting the inlet ends 14a of filter elements. The periphery 22b of the flange is secured to both the filter housing and the inlet chamber by means of bolts 22c passing through bores. In like manner, the bottom flange 24 (Figs 6 and 7) is a round plate having a plurality of openings 24a for receiving the outlet ends 14b of filter elements, as well as a series of peripheral bores 24b for bolting the flange to the filter housing.

As shown in Figures 1, 7, and 8, a sludge discharge manifold 20 having an integral manifold flange 21 is secured to the filter housing by means of bottom flange 24. The sludge discharge manifold comprises a set of pipes 20a-d, with one of the pipe set extending from the bottom end of each filter element 14HV to a discharge manifold tank 30, and with a back flush valve 32a-d in each pipe. The sludge manifold flange 21 is secured (Figs 1 and 7) to the filter housing by bottom flange 24.

In the embodiment of Figures 1-9 the filter housing is fitted with four filter elements supported at their ends 14a, 14b by the filter housing flange 22 and the bottom flange 24. The filter housing can be fitted with any number of filter elements depending on diameter of the filter, and the length of filter can be selected to fit the filter into available installation space. And the filter housing can be oriented in any position from horizontal to vertical. Each of the filter elements (Figs 1, 5 and 9) is a wedge wire filter consisting of three parts: top support 14a, filter screen 14c, and lower end ring 14b. The element top support is welded to the filter screen and machined to fit into the chamfered openings 22a of filter housing flange 22. The top support also has an edge 14d (Fig 5) resting on top of the flange 22 to take the load of the filter, as well as opening 14e for liquid entry into the filter interior chamber 14f. The opening 14e of the top support of each filter element is fitted with fins 32 that set the liquid flow in a spiral motion inside the filter element. In addition, fins 34 (Fig 5) may be placed within the filter element chamber 14f to achieve turbulent flow inside the element.

As explained in detail below, during back flushing of the filter elements, the spiral motion imparted by the fins 32, 34 to water flowing into the element washes the inside surface of the filter so as to increase the efficiency of the back flushing operation. The filter screen 14c itself is made of wedge wire with 50-micron slots and has internal support to strengthen the screen to meet a collapse pressure of a minimum of eight bars. It is to be understood that the screen can be of other filtration grades. The lower end ring 14b is welded to the screen with an outside diameter slightly smaller than the screen, and fits into the holes 24a (Fig 7) provided in the bottom flange 24.

The separating and filtering apparatus is especially designed for use in high flow systems such as ballast water treatment, cooling water, fish farming, potable water and industrial water for the purpose of removing suspended particles and organisms from the liquid. Liquid enters the apparatus through the inlet nozzle passing into the inlet chamber and flowing into the filter elements in a spiral motion imparted by entry opening fins. Liquid flows through the slots in the filter element wall into filter housing chamber. Particles and organisms larger that the filtration grade are trapped on the filter element inner surface. Filtered water is discharged through outlet nozzle 26. Particles and organisms collecting on the inner surface of the filter element will gradually clog up the filter so that the filter must be cleaned by back flushing. Back flushing of each filter element may be initiated either by occurrence of a set pressure differential over filter inlet and outlet, after a set elapsed time period. In accordance with the invention, only one filter element back flushes at a time so that the apparatus continues to deliver filtered water through the other filter elements.

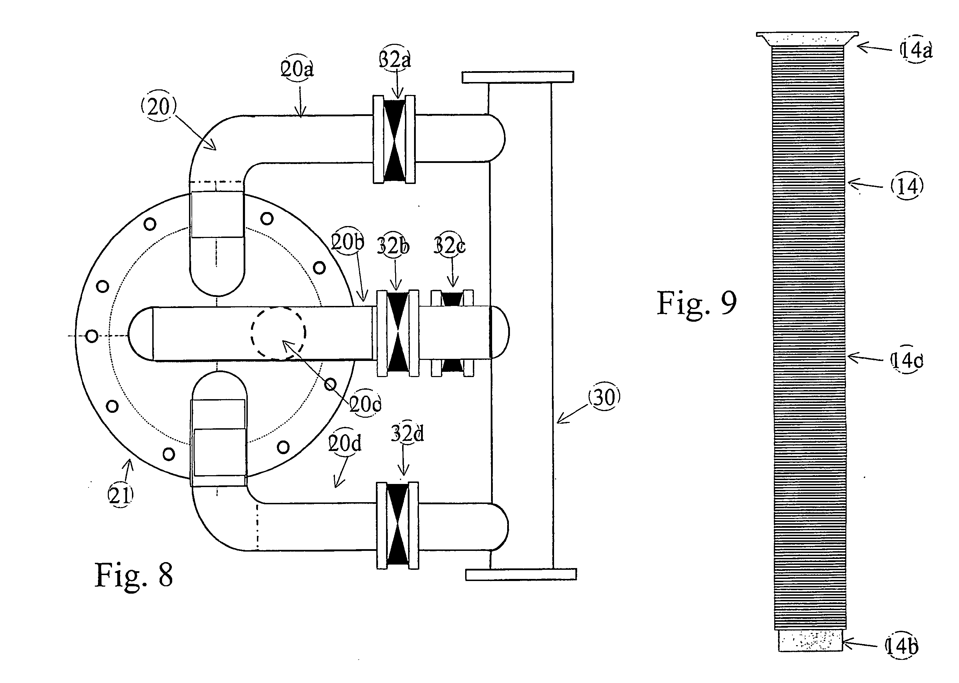

When back flush valve 32b for filter element IV (Figs 1 and 8) opens, water within the filter element flows into the sludge discharge manifold 30. Pressure inside the filter element is reduced and there is a free flow of already filtered water from the filter housing chamber 12b back through the filter element. When back flushing valve 32b is opened the pressure within the filter housing chamber is higher than the pressure within the filter element IV and there is a counter flow (back flushing) into the filter element with filtered water from the remaining operating elements HIL

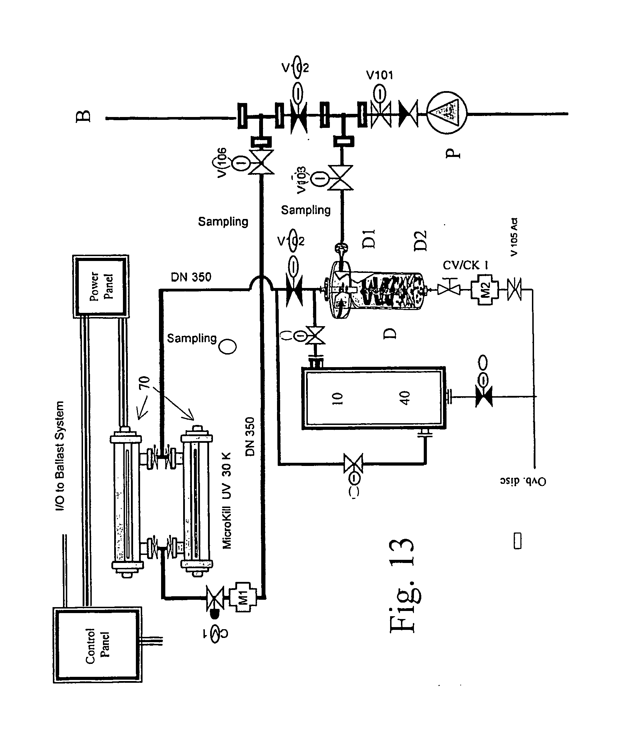

Particles that are wedged or jammed in the filter slots of element IV are washed back into the filter. By reason of reduced pressure, liquid velocity back through the element increases thereby washing the internal surface of the element. At the same time either pre-filtered or unfiltered water from inlet chamber 16a flows into the element with spiral motion imparted by entry fins 32 to increase the washing effect of the inners surface of the element. During back flushing the water pumps P (Fig 13) supplying water to the apparatus work normally. Discharge of filtered water from the apparatus is reduced by the quantity going to the sludge manifold. Back flushing duration is set by a controller and can be adjusted according to the dirt load in the water. If the elements clog before the time set, a differential pressure switch initiates back flushing. After filter element No IV is back flushed, the back flushing valve 32b closes and valve 32c opens for cleaning of filter element II. After all filter elements have been flushed, the filter apparatus repositions to normal operational mode. Sludge water from the individual elements flows through the individual manifold pipes 20a-d and into collector tank 30. The collector tank is connected to an outboard discharge pipe on a ship and to a sludge treatment facility in a land based application.

In shipboard installations, there is a counter-pressure in the sludge discharge line that is equal to the draft of the vessel when the apparatus is installed below the ship's water line. A control valve (not shown) is installed on the sludge discharge line that maintains automatically an internal pressure in the filter system greater that the counter-pressure. The control valve will regulate the balance of flow between clean liquid and sludge and maintain system pressure required for sludge discharge without the need for sludge discharge pumps. Injection pipes 28 passing through the top flange 26 (Figs 1-3) provide for air aided back flushing with one injection pipe for each filter element. During back flushing air improves the back flushing, especially when the water is very dirty. Air injection aids water turbulence and provides a great increase in cleaning efficiency for better cleaning of the filter elements. Ship's service compressed air at 7 bars is used.

The injection pipes can also be used for ballast water application of nitrogen, ozone, hydrogen peroxide, etc. For potable or wastewater chlorine may be added. An injection nozzle (not shown) at the end of the injection pipe and at the entry of the element disperses gasses in microbubbles or mix the liquids and gasses homogeneously into the water according to nozzle chosen. There are two liquid paths through the apparatus, a first filtering liquid path and a second or back flush liquid path with the path taken determined by closed and open positions of back flush valves 32a-d. A filtering liquid path is established when all back flush valves are closed. Liquid entering the apparatus at inlet pipe 16b flows through inlet chamber 16a into each filter element through its top end opening 14e (Fig 5) filling the interior of the filter elements and their sludge manifold pipes 20a-d up to back flush valves 32a-d.

Fluid pressure within the elements is greater than that within the filter housing chamber so that liquid continues flowing along the first path through the filter <'> screens into the housing chamber and out through outlet nozzle 26.

A second fluid path is established when one of the back flush valves (e.g., 32b) is opened and pressure within the filter element IV drops below that within the filter housing chamber. Water from the inlet chamber 16a flows into the filter element opening 14d, through the interior of the element, into sludge manifold pipe 20b, and on into the sludge manifold. At the same time, filtered liquid within the housing chamber joins the second fluid path by back flowing through the filter screen to the interior of the element, and on into the sludge manifold pipe 20b and into the sludge manifold. Sludge comprising filtered and unfiltered water along with organisms and particles continues moving the second fluid path from the sludge manifold to an overboard discharge line or other point of disposal in a land based operation.

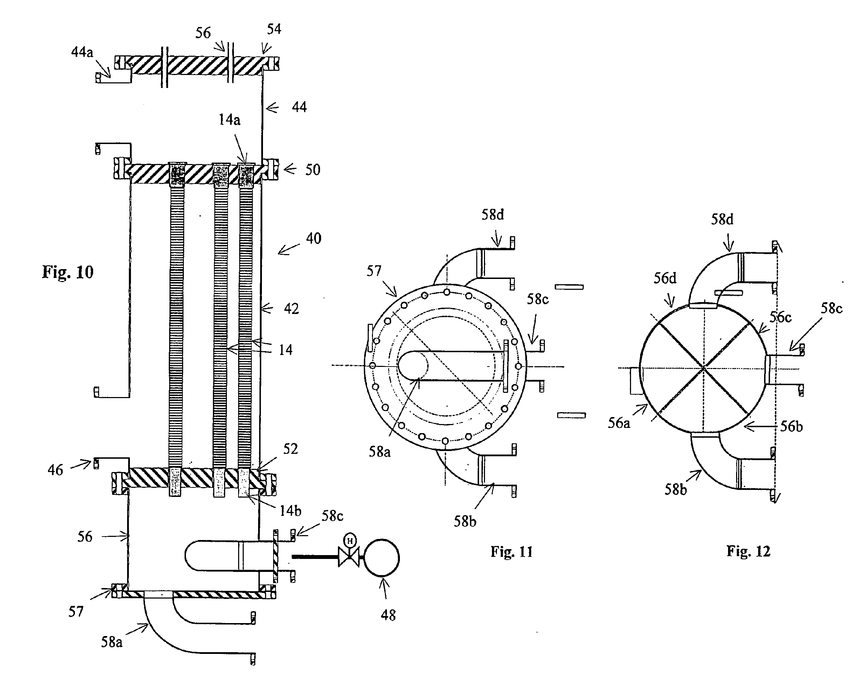

A modified embodiment of the apparatus 40 of the invention is illustrated in Figures 10-13 and comprises a filter housing 42, filter elements 14 positioned within the housing, an inlet manifold 44 for receiving and directing liquid to the filter housing, an outlet 46 for delivering filtered liquid from the filter housing, and a sludge manifold 48 for receiving and discharging from the filter housing a sludge of particles and organisms filtered by the filter elements from liquid processed by the apparatus.

The filter housing is an elongate shell defining housing chamber, is preferably cylindrical and is fitted with filter housing flange 50 and bottom flange 52.

Outlet nozzle 46 extends from the housing adjacent the bottom flange. The plurality of filter elements 14, are secured within the housing with element ends 14a and 14b fitted into the filter housing flange and the bottom flange, respectively.

The filter housing is surmounted by inlet chamber 44 secured to the filter housing flange. The inlet chamber includes inlet pipe 44a and an injection top flange 54 through which injection pipes 56 pass. The filter housing flange 50, bottom flange 52, and injection top flange 54 are similar in general arrangement to those is shown in Figures 4 - 7.

As shown in Figures 10-12, a sludge discharge manifold 56 is secured to the filter housing by means of the bottom flange. The sludge discharge manifold 56 comprises a tank subdivided into plural, typically four, compartments 56a-d with each compartment having filter element inlet openings through the bottom flange and an outlet pipe 58a-d with back flush valve extending from the bottom of each compartment to a sludge discharge tank. The outlet pipes are connected by flange 57 (Figs 10, 11) to the underside of the manifold 56. For simplicity of illustration, back flush valve 60 and sludge tank 48 shown in Figure 10 for pipe 58c are representative also for 58a, c and d.

Each compartment of the sludge manifold tank receives a back flush discharge from several filter elements. In Figure 10 three filter elements are shown connected through bottom flange to compartment 56a of the manifold tank. With this arrangement undue piping complexities are avoided while enabling the back flushing of multiple filter elements with operation of a single control valve 58a.

As shown in Figures 11 and 12, multiple filter elements drain into a single compartment, and a single pipe and valve connects each compartment to a sludge discharge tank, as represented at 48 and 60. The piping, valve, sludge discharge tank, and filter elements are the same as for the embodiment of Figures 1-9.

Figure 13 shows a schematic line drawing of a shipboard installation of the apparatus according to the invention for treating ballast water. High volume, low pressure ballast pumps P provide seawater to the filter/separation device in one of two ways. First, ballast water may be pre-filtered through a device D for separating and filtering particles and organisms. The device is described and claimed in our International Application No. PCT/US02/41909 and includes a conical or cylindrical shape inlet chamber Di where liquids enter tangentially creating a circular flow without creating a vortex, the liquids accelerate into a separation and filter chamber D2 where the liquids spin around a longitudinally disposed filter element in the center of the chamber, with the centrifugal forces separating out larger and heavier particles towards the perimeter of the separation and filter chamber, and where smaller particles having a specific gravity closer to that of the liquid are filtered when the liquid penetrates through the filter element wall into the center of the filter element and flows out one of the longitudinal outlets of the unit. A sludge of filtered particles and organisms are piped to an overboard discharge line L.

The water so pre-filtered is then introduced in the preferred or modified apparatus 10, 40 of the present invention for further and final separation of particles and organisms from the water with the sludge of filtered particles and organisms piped overboard.

In a second arrangement according to the invention, the prefiltering device can be by-passed with ballast pumps providing unfiltered water to the filter of this invention. Purified water then flows from the filter 10, 40 to one or more ultraviolet chambers 70 in order to inactivate aquatic nuisance species including bacteria,microorganisms and pathogens.

Finally ballast water with organisms and particles filtered out, and with nuisance species inactivated is piped to ballast tanks B.

In operation, the filter (Figures 1 and 10) receives either pre-filtered or unfiltered water for removal of organisms and particles. Water flowing at high volume, low pressure from shipboard ballast pumps enters the inlet chamber and, flows directly into the filtering elements. Fins located within the elements cause turbulent water flow. Air from injection pipes further increases the turbulence of water flowing into the elements. The filtering elements retain organisms and particles on their interior surface as water filters through the 50 , micron element standard into the filter chamber and through the outlet to shipboard ballast tanks.

Gradually, filtering efficiency of the elements diminishes as organisms and particles collect on the interior filter surface. Loss of efficiency causes a pressure increase across the filter element, which loss is detected by a pressure controller to open a corresponding filter element sludge valve. Upon valve opening there is an immediate pressure drop within the filter element such that filtered water within the filter housing chamber now at a greater pressure backflushes through the filter element to loosen and remove organisms and particles on the interior surface. At the same time, unfiltered water from the inlet chamber in turbulent flow scours the interior filter surface carrying away organisms and particles lodged there. A sludge of filtered water, unfiltered water, and organisms and particles progresses to the sludge manifold and is discharged overboard. Backflushing is completed when the pressure is equalized between filter element interior and filter chamber so that the pressure controller closes the corresponding sludge valve. With the valve closed pressure within the element increases and water filtering resumes in the normal way. In preferred operation, filter elements are back flushed sequentially so as to ensure a net flow of filtered ballast water from the system at all times of operation.

Materials used for the apparatus include standard piping for the inlet head and filter housing, CuNi 90/10 for seawater service and AISI 316L for other applications. Carbon steel with rubber lining is also available. Injection, filter housing and bottom flanges can be made of cast nylon PLA 6 which possesses sufficient strength, wear and chemical resistance, and is lightweight. The manifold flange is the same material as the ballast system, normally, hot dipped galvanized carbon steel or GRE. The filter screen is made of wedge wire with 50-micron slots, or other filtration grades as desired. The screen is welded to the top and bottom supports and has internal support to strengthen the screen to meet a collapse pressure of minimum 8 bars.

It is to be understood that while the invention has been described with specific reference to shipboard ballast systems, the device is especially designed for use in high flow systems including cooling water, fish farming, potable water and industrial water systems.

Various changes may be made to the equipment arrangements embodying the principles of the invention. The foregoing embodiments are set forth in an illustrative and not in a limiting sense. The scope of the invention is defined by the claims appended hereto.

## Claims

1. An apparatus (10) for separating and filtering organisms and particles from a high volume flowing liquid comprising a filter housing (12) defining a filter housing chamber (12b), a plurality of elongate filter elements (14) each having an enclosed filter screen (14c) defining an interior filter element chamber (14f), each filter element has an entry opening (14e) for receiving liquid from the inlet manifold, fins (32) located in the entry opening to set liquid flow in a spiral motion inside the filter elements, an inlet manifold (16) surmounting the filter housing and defining an inlet chamber (16a) in communication with the filter element chambers, injection pipes (28) fitted to the inlet chamber to inject air into the filter elements to aid turbulence of liquid flowing into the elements (14) and to increase cleaning efficiency of the filter elements, an outlet nozzle (18) for delivering filtered liquid from the housing chamber, a sludge discharge manifold (20) secured to the filter housing in fluid communication with the bottom end (14b) of filter elements and with a sludge disposal point, the sludge discharge manifold (20) for receiving flowing liquid from filter elements, back flush valves (32a-d) in the sludge manifold for controlling liquid flow from filter element chambers, the apparatus defining a first fluid path for filtering liquid, said first path extending from the inlet manifold (16), into the filter element chamber (14f) and through the filter screen (14c) into the housing chamber (12b) and through the outlet nozzle (18), the apparatus defining a second fluid path for both unfiltered liquid flowing from the inlet manifold (16) and filtered liquid flowing from the filter housing chamber (12b) into the interior of filter elements (14f), then flowing through the sludge discharge manifold tank (30) to a disposal point, so that when a back flush valve is closed liquid received by the apparatus through the inlet manifold passes through the first fluid path, and when a back flush valve is open, the filter screen is cleaned by means of both unfiltered liquid from the inlet chamber and filtered liquid from the filter housing chamber flowing in the second fluid path, and further by means of injection of air into the filter elements.

2. An apparatus as defined in claim 1 in which the filter elements have fins (34) extending along the interior filter element chamber (14f) to sustain turbulent liquid flow within the chamber.

3. An apparatus as defined in claim 1 in which the filter screen is wedge wire with 50 micron slots, and with internal support to meet a collapse pressure of a minimum of 8 bars.

4. An apparatus as defined in claim 1 which further includes a pressure control valve for maintaining an internal pressure in the apparatus sufficient to overcome a counter-pressure occurring when the apparatus is installed in a ship below the ship's water line thereby enabling overboard discharge of sludge against the counter-pressure without the need for sludge discharge pumps.

5. An apparatus (40) for separating and filtering organisms and particles from a high volume flowing liquid comprising a filter housing (42) defining a filter housing chamber, the filter housing having a filter housing flange (50) and a bottom flange (52), the filter housing flange and the bottom having aligned openings there-through for receiving an elongate filter element (14), a plurality of elongate filter elements each having an enclosed filter screen (14c) defining an interior filter element chamber (14f), the elements further having top (14a) and bottom (14b) ends, the top and bottom ends positioned respectively, in the aligned openings of the housing flange and the bottom flange, an inlet manifold (44) surmounting the filter housing and defining an inlet chamber in communication with the filter element chambers, an inlet pipe (44a) for admitting liquid to the inlet chamber, each filter element having an entry opening (14e) for receiving liquid from the inlet manifold, fins (32) located in the entry opening to set liquid flow in a spiral motion inside the filter elements, injection pipes fitted to the inlet chamber to inject air into the filter elements to aid turbulence of liquid flowing into the elements and to increase cleaning efficiency of the filter elements, an outlet nozzle (46) for delivering filtered liquid from the filtered housing chamber, a sludge discharge manifold (56) secured to the filter housing in fluid communication with the bottom end of the filter elements, the sludge discharge manifold comprising a tank subdivided into compartments (56a-d) with each compartment receiving discharge from several filter elements and each compartment having an outlet pipe (58a-d) extending to a sludge discharge tank (48), and each outlet pipe fitted with a back flush valve (60), the apparatus defining a first fluid path for liquid from the inlet pipe through the inlet manifold, into the filter element chamber and through the filter screen into the housing chamber and through the outlet nozzle, the apparatus defining a second fluid path including both unfiltered liquid from the inlet manifold and filtered liquid from the filter housing chamber into the interior of filter elements, through the sludge discharge manifold to a disposal point, so that when the back flush valve is closed liquid received by the apparatus passes through the first fluid path, and when the back flush valve is open, the filter screen is cleaned by means of both filtered liquid from the filter housing chamber flowing in a second fluid path back through the filter screen to remove organisms and particles from the filter screen interior surface, and by unfiltered liquid flowing from the inlet manifold through the filter element chamber to remove organisms and particles from the filter screen interior surface, the filter screen further cleaned by means of injection of air into the filter elements, and with a sludge of filtered and unfiltered liquid together with organisms and particles flowing along the second fluid path to a disposal point.

6. An apparatus as defined in claim 1 in which the injection pipes inject a gas selected from one of nitrogen, ozone, hydrogen peroxide, and chlorine for application to the liquid being filtered.

7. An apparatus as defined in claim 1 in which the injection pipes inject gas in microbubbles to mix gas and liquid homogeneously.

8. An apparatus as defined in claim 1 which further comprises a controller for initiating back flushing at a set time, the controller having a differential pressure switch to initiate back flushing in the event the filter elements clog before elapse of the set time.

9. A method for separating and filtering organisms and particles from a high volume flowing liquid comprising the steps of:
- establishing a first fluid path for flow of liquid from an inlet point (16a) into a filter screen chamber (14f), through the filter screen (14c) in a filtering direction and through a collection chamber (12b) to a point of discharge (18) of filtered liquid,
- setting liquid flowing in a spiral motion into the filter screen chamber,
- injecting air (28) into the fluid at the inlet point (16a) for imparting turbulence to liquid flowing into the filter screen chamber (12b),
- establishing a second fluid path from the collection chamber (12b) through the filter screen (14c) in a filter cleaning direction to a point of disposal (20), and from the inlet point (16a) through the filter screen chamber (14f) to the point of disposal (20),
- selecting the first fluid path for filtering liquid,
- monitoring the pressure differential between the filter screen chamber and the collection chamber,
- selecting the second path for liquid flow when pressure differential reaches a predetermined value so as to clean the filter with both filtered and unfiltered liquid,
- discharging at the point of disposal a sludge of organisms and particles entrained in a mix of filtered and unfiltered liquid generated in the course of flow through the second fluid path,
- maintaining a pressure on the second fluid path to enable flow to the point of discharge against a given counter-pressure.

10. A method as defined in claim 9 which further includes the step of irradiating filtered liquid with ultraviolet radiation.

## Patentansprüche

1. Eine Vorrichtung (20) zur Abtrennung und Filterung von Organismen und Partikeln aus einer hochvolumigen strömenden Flüssigkeit, umfassend
ein Filtergehäuse (12), das eine Filtergehäusekammer (12b) definiert,
eine Vielzahl von länglichen Filterelementen (14), jeweils aufweisend ein beigefügtes Filtersieb (14c), die eine innere Filterelementkammer (14f) definieren, wobei jedes Filterelement zum Empfangen von Flüssigkeit von dem Einlassstutzen eine Eingangsöffnung (14e) und Lamellen (32), die in der Eingangsöffnung angeordnet sind, um den Flüssigkeitsfluss innerhalb der Filterelemente in eine spiralförmige Bewegung zu versetzen, aufweist,
einen Einlassstutzen (16), der das Filtergehäuse überragt und eine mit den Filterelementkammern in Verbindung stehende Einlasskammer (16a) definiert,
Injektionsleitungen (28), die an der Einlasskammer angebracht sind, um Luft in die Filterelemente zu injizieren, um Turbulenzen der in die Elemente (14) fließenden Flüssigkeit zu unterstützen und um die Säuberungseffizienz der Filterelemente zu erhöhen,
eine Austrittsdüse (18) zur Lieferung von gefilterter Flüssigkeit aus der Gehäusekammer,
ein am Filtergehäuse befestigter Schlammabgabeverteiler (20), in Fluidverbindung stehend mit dem unteren Ende (14b) der Filterelemente und mit einem Schlammentsorgungspunkt, wobei der Schlammabgabeverteiler (20) zum Empfangen von fließender Flüssigkeit von den Filterelementen dient, und
Rückspülventile (32a-d) in dem Schlammverteiler zur Steuerung der Flüssigkeitsströmung von den Filterelementkammern,
wobei die Vorrichtung einen ersten Fluidpfad zur Filterung von Flüssigkeit definiert, wobei sich dieser erste Pfad von dem Einlassstutzen (16) in die Filterelementkammer (14f) und durch das Filtersieb (14c) in die Gehäusekammer (12b) und durch die Austrittsdüse (18) erstreckt,
wobei die Vorrichtung einen zweiten Fluidpfad definiert, sowohl für ungefilterte Flüssigkeit, die von dem Einlassstutzen (16) strömt, als auch für gefilterte Flüssigkeit, die von der Filtergehäusekammer (12b) in das Innere der Filterelemente (14f) fließt, die dann durch den Schlammabgabeverteilertank (30) zu einem Entsorgungspunkt fließen, so dass, wenn ein Rückspülventil geschlossen ist, von der Vorrichtung empfangene Flüssigkeit durch den Einlassstutzen durch den ersten Fluidpfad verläuft, und wenn ein Rückspülventil offen ist, das Filtersieb durch sowohl ungefilterte Flüssigkeit aus der Einlasskammer als auch durch gefilterte Flüssigkeit aus der Filtergehäusekammer, die in dem zweiten Fluidpfad fließt, gereinigt wird und ferner durch die Injektion von Luft in die Filterelemente.

2. Eine Vorrichtung nach Anspruch 1, in der die Filterelemente Lamellen (34) haben, die sich entlang der inneren Filterelementkammer (14f) erstrecken, um den wirbelnden Flüssigkeitsstrom innerhalb der Kammer aufrechtzuerhalten.

3. Eine Vorrichtung nach Anspruch 1, in der das Filtersieb ein Keildraht mit 50-Mikrometer-Steckplätzen ist, und mit einer inneren Unterstützung, um einen Versagensdruck von mindestens 8 bar zu erreichen.

4. Eine Vorrichtung nach Anspruch 1, die ferner ein Steuerdruckventil zur Aufrechterhaltung eines internen Drucks in der Vorrichtung enthält, der ausreichend ist, um einen Gegendruck zu überwinden, der auftritt, wenn die Vorrichtung in einem Schiff unter der Wasserlinie des Schiffs installiert wird und auf diese Weise eine Überbordentsorgung des Schlamms entgegen dem Gegendruck ermöglicht, ohne die Notwendigkeit von Schlammabförderpumpen.

5. Eine Vorrichtung (40) zur Abtrennung und Filterung von Organismen und Partikeln aus einer hochvolumigen strömenden Flüssigkeit, umfassend
ein Filtergehäuse (42), das eine Filtergehäusekammer definiert, wobei das Filtergehäuse einen Filtergehäuseflansch (50) und einen Unterflansch (52) aufweist und der Filtergehäuseflansch und der Unterflansch zueinander ausgerichtete Öffnungen dort hindurch zur Aufnahme eines länglichen Filterelements (14) haben,
eine Vielzahl von länglichen Filterelementen, die jeweils ein beigefügtes Filtersieb (14c) aufweisen, die eine innere Filterelementkammer (14f) definieren, wobei die Elemente ferner obere (14a) und untere (14b) Enden aufweisen, wobei die oberen und unteren Enden jeweils in den zueinander ausgerichteten Öffnungen des Gehäuseflansches und des Unterflansches positioniert sind,
einen Einlassstutzen (44), der das Filtergehäuse überragt und der eine Einlasskammer definiert, die in Verbindung mit den Filterelementkammern steht,
ein Einlassrohr (44a) zum Einlassen von Flüssigkeit in die Einlasskammer, wobei jedes Filterelement eine Eingangsöffnung (14e) zum Empfangen von Flüssigkeit von dem Einlassstutzen aufweist und wobei Lamellen (32) in der Eingangsöffnung angeordnet sind, um den Flüssigkeitsstrom in eine spiralförmige Bewegung innerhalb der Filterelemente zu versetzen,
an der Einlasskammer befestigte Injektionsleitungen, um Luft in die Filterelemente zu injizieren, um Turbulenzen der in die Elemente fließenden Flüssigkeit zu unterstützen und um die Säuberungseffizienz der Filterelemente zu erhöhen,
eine Austrittsdüse (46) zur Lieferung von gefilterter Flüssigkeit aus der gefilterten Gehäusekammer,
ein am Filtergehäuse befestigter Schlammabgabeverteiler (56), in Fluidverbindung stehend mit dem unteren Ende der Filterelemente, wobei der Schlammabgabeverteiler einen Tank umfasst, der in Abteilungen (56a-d) unterteilt ist, wobei jedes Abteil den Austritt von verschiedenen Filterelementen aufnimmt und wobei jedes Abteil ein Auslassrohr (58a-d) hat, das sich zu einem Schlammabgabetank (48) erstreckt, und wobei jedes Austrittsrohr mit einem Rückspülventil (60) ausgestattet ist,
wobei die Vorrichtung einen ersten Fluidpfad für Flüssigkeiten von dem Einlassrohr durch den Einsaugstutzen, in die Filterelementkammer und durch das Filtersieb in die Gehäusekammer und durch die Austrittsdüse definiert,
wobei die Vorrichtung einen zweiten Fluidpfad definiert, enthaltend sowohl ungefilterte Flüssigkeit von dem Eintrittsstutzen als auch gefilterte Flüssigkeit von der Filtergehäusekammer, in das Innere der Filterelemente, durch den Schlammabgabeverteiler zu dem Entsorgungspunkt, so dass, wenn das Rückstromventil geschlossen ist, von der Vorrichtung empfangene Flüssigkeit durch den ersten Fluidpfad verläuft, und wenn das Rückstromventil offen ist, das Filtersieb durch sowohl gefilterte Flüssigkeit aus der Filtergehäusekammer, die in einem zweiten Fluidpfad zurück durch das Filtersieb fließt, gereinigt wird, um Organismen und Partikel von der inneren Oberfläche des Filtersiebs zu entfernen, und durch ungefilterte Flüssigkeit, die von dem Einlassstutzen durch die Filterelementkammer fließt, um Organismen und Partikel von der inneren Oberfläche des Filtersiebs zu entfernen, wobei das Filtersieb ferner durch Injektion von Luft in die Filterelemente gereinigt wird, und mit einem Schlamm von gefilterter und ungefilterter Flüssigkeit, zusammen mit Organismen und Partikeln, die entlang des zweiten Fluidpfades zu einem Entsorgungspunkt fließen.

6. Eine Vorrichtung nach Anspruch 1, in der die Injektionsleitungen ein Gas injizieren, wobei das Gas als eines aus Stickstoff, Ozon, Wasserstoffperoxid und Chlor zur Anwendung auf die zu filternde Flüssigkeit ausgewählt wird.

7. Eine Vorrichtung nach Anspruch 1, in der die Injektionsleitungen Gas in Mikrobläschen injizieren, um Gas und Flüssigkeit homogen zu mischen.

8. Eine Vorrichtung nach Anspruch 1, ferner umfassend eine Steuerung, um ein Rückspülen zu einer vorgegebenen Zeit zu initiieren, wobei die Steuerung einen Differenzdruckschalter aufweist, um eine Rückspülung im Falle einer Verstopfung der Filterelemente vor dem Ablauf der vorgegebenen Zeit zu initiieren.

9. Ein Verfahren zur Abtrennung und Filterung von Organismen und Partikeln aus einer hochvolumigen strömenden Flüssigkeit, umfassend die Schritte:
- Einrichten eines ersten Fluidpfades für den Strom einer Flüssigkeit von einem Einlasspunkt (16a) in eine Filtersiebkammer (14f), durch das Filtersieb (14c) in einer Filterrichtung und durch eine Sammelkammer (12b) zu einem Abgabepunkt (18) von gefilterter Flüssigkeit,
- Veranlassen, dass die Flüssigkeit in einer spiralförmigen Bewegung in die Filtersiebkammer strömt,
- Injizieren von Luft (28) in die Flüssigkeit an dem Eintrittspunkt (16a), um Turbulenzen an die Flüssigkeit weiterzugeben, die in die Filtersiebkammer (12b) fließt,
- Einrichten eines zweiten Fluidpfades von der Sammelkammer (12b) durch das Filtersieb (14c) in einer Filterreinigungsrichtung zu einem Abgabepunkt (20) und von dem Einlasspunkt (16a) durch die Filtersiebkammer (14f) zu dem Abgabepunkt (20),
- Auswahl des ersten Fluidpfades zur Filterung von Flüssigkeit,
- Überwachung des Differenzialdrucks zwischen der Filtersiebkammer und der Sammelkammer,
- Auswählen des zweiten Pfades für den Flüssigkeitsstrom, wenn der Differenzialdruck einen vorbestimmten Wert erreicht, um den Filter sowohl mit gefilterter als auch ungefilterter Flüssigkeit zu reinigen,
- Abgeben an dem Abgabepunkt eines Schlamms von Organismen und Partikeln, die in einer Mischung von gefilterter und ungefilterter Flüssigkeit mitgerissen werden, die bei der Strömung durch den zweiten Fluidpfad erzeugt werden,
- Aufrechterhalten eines Druckes in dem zweiten Fluidpfad, um eine Strömung zu dem Abgabepunkt gegen einen gegebenen Gegendruck aufrecht zu erhalten.

10. Ein Verfahren nach Anspruch 9, das ferner den Schritt der Bestrahlung von gefilterter Flüssigkeit mit Ultraviolettstrahlung enthält.

## Revendications

1. Appareil (10) pour séparer et filtrer des organismes et particules d'un liquide s'écoulant en grand volume, comprenant un boîtier de filtre (12) qui définit une chambre de boîtier de filtre (12b), une pluralité d'éléments filtrants allongés (14) contenant chacun une toile filtrante (14c) qui définit une chambre intérieure d'élément filtrant (14f), chaque élément filtrant ayant une ouverture d'entrée (14e) destinée à recevoir du liquide arrivant du collecteur d'entrée, des ailettes (32) placées dans l'ouverture d'entrée pour mettre l'écoulement de liquide en mouvement spiral à l'intérieur des éléments filtrants, un collecteur d'entrée (16) qui surmonte le boîtier de filtre et définit une chambre d'entrée (16a) en communication avec les chambres d'éléments filtrants, des tubes d'injection (28) raccordés à la chambre d'entrée pour injecter de l'air dans les éléments filtrants afin d'assister la turbulence du liquide qui pénètre dans les éléments (14) et d'accroître l'efficacité du nettoyage des éléments filtrants, une buse de sortie (18) destinée à évacuer le liquide filtré de la chambre de boîtier, un collecteur de décharge de boue (20) fixé au boîtier de filtre et en communication fluidique avec l'extrémité inférieure (14b) des éléments filtrants et avec un point de vidange de boue, le collecteur de décharge de boue (20) destiné à recevoir un liquide en écoulement qui sort des éléments filtrants, des vannes de rétro-balayage (32a-d) montées dans le collecteur de boue pour commander l'écoulement du liquide sortant des chambres à éléments filtrants, l'appareil définissant un premier trajet de fluide pour le liquide à filtrer, ledit premier trajet partant du collecteur d'entrée (16), pénétrant dans la chambre d'élément filtrant (14f), traversant la toile filtrante (14c), pénétrant dans la chambre de boîtier (12b) et passant par la buse de sortie (18), l'appareil définissant un second trajet de fluide servant aussi bien pour le liquide non filtré qui arrive du collecteur d'entrée (16) que pour le liquide filtré arrivant de la chambre du boîtier de filtre (12b) et pénétrant dans le volume intérieur des éléments filtrants (14f) puis passant à travers la cuve du collecteur de décharge de boue (30) pour atteindre un point de vidange, de sorte que, lorsqu'une vanne de rétro-balayage est fermée, le liquide reçu par l'appareil à travers le collecteur d'entrée passe par le premier trajet de fluide et que, lorsque la vanne de rétro-balayage est ouverte, la toile filtrante est nettoyée à la fois au moyen du liquide non filtré arrivant de la chambre d'entrée et au moyen du liquide filtré arrivant de la chambre de boîtier de filtre qui s'écoule dans le second trajet de fluide et, en outre, par injection d'air dans les éléments filtrants.

2. Appareil selon la revendication 1, dans lequel les éléments filtrants possèdent des ailettes (34) qui s'étendent le long de chambre intérieure d'élément filtrant (14f) pour assister l'écoulement turbulent du liquide à l'intérieur de la chambre.

3. Appareil selon la revendication 1, dans lequel la toile filtrante est une toile de fils profilés présentant des fentes de 50 microns et comporte un support interne capable de résister à une pression d'effondrement de 8 bars au minimum.

4. Appareil selon la revendication 1, qui comprend en outre une vanne de commande de la pression destinée à maintenir dans l'appareil une pression interne suffisante pour surmonter une contre-pression qui se manifeste lorsque l'appareil est installé dans un navire au-dessous de la ligne de flottaison du navire, en permettant ainsi de décharger la boue du bord à l'encontre de la contre-pression sans nécessiter de pompes de décharge de la boue.

5. Appareil (40) destiné à séparer et filtrer des organismes et particules d'un liquide s'écoulant à grand débit, comprenant un boîtier de filtre (42) qui définit une chambre de boîtier de filtre, le boîtier de filtre présentant une bride de boîtier de filtre (50) et une bride inférieure (52), la bride de boîtier de filtre et la bride inférieure ayant des ouvertures traversantes alignées destinées à recevoir un élément filtrant allongé (14), une pluralité d'éléments filtrants allongés dont chacun renferme une toile filtrante (14c) qui définit une chambre intérieure d'élément filtrant (14f), les éléments ayant en outre des extrémités supérieure (14a) et inférieure (14b), les extrémités supérieure et inférieure étant positionnées respectivement, dans les ouvertures alignées de la bride de boîtier et de la bride inférieure, un collecteur d'entrée (44) qui surmonte le boîtier de filtre et définit une chambre d'entrée en communication avec les chambres d'éléments filtrants, un tube d'entrée (44a) destiné à admettre le liquide dans la chambre d'entrée, chaque élément filtrant ayant une ouverture d'entrée (14e) pour recevoir le liquide arrivant du collecteur d'entrée, des ailettes (32) logées dans l'ouverture d'entrée pour mettre l'écoulement de liquide en mouvement spiral à l'intérieur des éléments filtrants, des tubes d'injection raccordés à la chambre d'entrée pour injecter de l'air dans les éléments filtrants afin d'assister la turbulence du liquide qui pénètre dans les éléments et d'améliorer l'efficacité du nettoyage des éléments filtrants, une buse de sortie (46) destinée à décharger le liquide filtré de la chambre de boîtier de filtre, un collecteur de décharge de boue (56) fixé au boîtier de filtre en communication fluidique avec l'extrémité inférieure des éléments filtrants, le collecteur de décharge de boue comprenant une cuve subdivisée en compartiments (56a-d), chaque compartiment recevant la décharge de plusieurs éléments filtrants et chaque compartiment ayant un tube de sortie (58a-d) qui s'étend jusqu'à une cuve de décharge de boue (48), et chaque tube de sortie étant équipé d'une vanne de rétro-balayage (60), l'appareil définissant un premier trajet de fluide pour le liquide qui arrive du tube d'entrée, traverse le collecteur d'entrée, pénètre dans la chambre d'élément filtrant et traverse la toile filtrante pour pénétrer dans la chambre de boîtier, puis pour passer par la buse de sortie, l'appareil définissant un second trajet de fluide qui comprend aussi bien le liquide non filtré arrivant du collecteur d'entrée que le liquide filtré arrivant de la chambre de boîtier de filtre, qui pénètre dans le volume intérieur des éléments filtrants, et passe par le collecteur de décharge de boue pour atteindre un point de vidange de sorte que, lorsque la vanne de rétro-balayage est fermée, le liquide reçu par l'appareil passe par le premier trajet de fluide et que, lorsque la vanne de rétro-balayage est ouverte, la toile filtrante est nettoyée aussi bien au moyen du liquide filtré arrivant de la chambre de boîtier de filtre et s'écoulant dans un second trajet de fluide qui s'écoule en rétro-balayage à travers la toile filtrante afin d'évacuer les organismes et particules de la surface intérieure du tamis filtrant qu'au moyen du liquide non filtré qui arrive du collecteur d'entrée en traversant la chambre d'élément filtrant pour évacuer les organismes et particules de la surface intérieure de la toile filtrante, la toile filtrante étant en outre nettoyée par injection d'air dans les éléments filtrants, une boue de liquide filtré et de liquide non filtré, avec organismes et particules s'écoulant le long du second trajet de fluide pour arriver à un point de vidange.

6. Appareil selon la revendication 1, dans lequel les tubes d'injection injectent un gaz choisi parmi l'azote, l'ozone, le peroxyde d'hydrogène et le chlore pour l'appliquer au liquide soumis à filtration.

7. Appareil selon la revendication 1, dans lequel les tubes d'injection injectent du gaz sous la forme de microbulles pour mélanger le gaz et le liquide de façon homogène.

8. Appareil selon la revendication 1, qui comprend en outre une unité de commande pour déclencher le rétro-balayage à un instant défini, l'unité de commande comportant un commutateur à pression différentielle pour déclencher le rétro-balayage dans le cas où les éléments filtrants sont obstrués avant l'écoulement du temps défini.

9. Procédé pour séparer et filtrer des organismes et particules d'un liquide s'écoulant en grand volume, comprenant les étapes consistant à :
- établir un premier trajet de fluide pour l'écoulement d'un liquide arrivant d'un point d'entrée (16a), pénétrant dans une chambre d'élément filtrant (14f), traversant la toile filtrante (14c) dans un sens de filtration, et passant par une chambre collectrice (12b) pour atteindre un point de décharge de liquide filtré (18),
- imprimer un mouvement spiral au liquide qui pénètre dans la chambre de la toile filtrante,
- injecter de l'air (28) dans le fluide au point d'entrée (16a) pour imprimer une turbulence au liquide qui pénètre dans la chambre de toile filtrante (12b),
- établir un second trajet de fluide de la chambre collectrice (12b) en traversant la toile filtrante (14c) dans un sens de nettoyage du filtre jusqu'à un point de vidange (20) et du point d'entrée (16a) au point de vidange (20) en traversant la chambre de toile filtrante (14f).
- sélectionner le premier trajet de fluide pour le liquide à filtrer,
- surveiller la différence de pression entre la chambre de toile filtrante et la chambre collectrice,
- sélectionner le second trajet pour l'écoulement du liquide lorsque la différence de pression atteint une valeur prédéterminée de manière à nettoyer le filtre tant avec du liquide filtré qu'avec du liquide non filtré,
- décharger au point de vidange une boue d'organismes et de particules entraînée dans un mélange de liquide filtré et non filtré qui a été généré au cours de l'écoulement empruntant le second trajet de fluide,
- maintenir une pression sur le second trajet de fluide pour permettre l'écoulement jusqu'au point de décharge en surmontant une contre-pression donnée.

10. Procédé selon la revendication 9, qui comprend en outre les étapes consistant à irradier le liquide filtré avec un rayonnement ultraviolet.
